(19) Europäisches Patentamt / European Patent Office / Office européen des brevets

(11) **EP 3 185 985 B1**

(12) **EUROPÄISCHE PATENTSCHRIFT**

(45) Veröffentlichungstag und Bekanntmachung des Hinweises auf die Patenterteilung:
**08.04.2020  Patentblatt 2020/15**

(21) Anmeldenummer: **15731274.5**

(22) Anmeldetag: **17.06.2015**

(51) Int Cl.:
**B01D 46/00** *(2006.01)*    **B01D 46/10** *(2006.01)*
**B01D 46/52** *(2006.01)*

(86) Internationale Anmeldenummer:
**PCT/EP2015/063529**

(87) Internationale Veröffentlichungsnummer:
**WO 2016/030037 (03.03.2016 Gazette 2016/09)**

(54) **FILTERELEMENT MIT SCHRÄGER DICHTUNGSEBENE**

FILTERING ELEMENT WITH AN OBLIQUE SEALING PLANE

ÉLÉMENT FILTRANT À PLAN D'ÉTANCHÉITÉ OBLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2014   DE 102014012490**

(43) Veröffentlichungstag der Anmeldung:
**05.07.2017   Patentblatt 2017/27**

(73) Patentinhaber: **Mann+Hummel GmbH**
**71636 Ludwigsburg (DE)**

(72) Erfinder:
• **WÜBBELING, Martin**
  **68161 Mannheim (DE)**
• **NGUYEN, Duc Cuong**
  **30880 Laatzen (DE)**
• **BRANDT, Beate**
  **68804 Altlussheim (DE)**
• **MÜNKEL, Karlheinz**
  **75038 Oberderdingen-Flehingen (DE)**

(74) Vertreter: **Seyboth, Matthias**
**Mann+Hummel International GmbH & Co. KG**
**Schwieberdinger Straße 126**
**71636 Ludwigsburg (DE)**

(56) Entgegenhaltungen:
**JP-A- 2001 329 921      JP-U- H0 667 852**
**US-A1- 2004 020 177**

EP 3 185 985 B1

## Beschreibung

### Technisches Gebiet

Die folgende Erfindung betrifft einen Filter, insbesondere für Brennkraftmaschinen, zur Filterung eines Fluids, insbesondere von Luft, insbesondere die Ansaugluft von Brennkraftmaschinen.

### Stand der Technik

Die Motorluftfiltration gewinnt insbesondere bei Bau- und Landmaschinen zunehmend an Bedeutung. Beispielsweise sind aus JP H06-67852 U, JP 2001 329921 A und US 2004/020177 A1 verschiedene Motorluftfilter bekannt. Höhere Motorleistungen und strengere Emissionsrichtlinien erfordern einen erhöhten Luftdurchsatz durch den Motor. Dies erfordert leistungsfähigere Luftfilter. Die Leistungsfähigkeit eines Luftfilters wird durch den Strömungswiderstand und die durch die Filterkapazität bedingte Standzeit charakterisiert. Hinsichtlich beider Größen ist ein großformatiges Filterelement gegenüber einem kleineren Filterelement überlegen. Allerdings können bei größeren Filterelementen Probleme auftreten: Aufgrund des erhöhten Eigengewichts, insbesondere im teil- oder vollbeladenen Zustand, können Dichtungsprobleme insbesondere bei starken Beschleunigungen des Filterelements auftreten. Diese hohen Beschleunigungen können beispielsweise durch Vibrationen ausgelöst werden, die von dem Fahrzeug auf das Filterelement übertragen werden.

Es ist eine Aufgabe der Erfindung, einen Filter und ein Filterelement für einen Filter, insbesondere für Brennkraftmaschinen, zur Filterung eines Fluids, insbesondere von Luft, anzugeben, die eine hohe Dichtwirkung zwischen Filterelement und Filtergehäuse insbesondere bei einem hohen Eigengewicht des Filterelements ermöglichen.

### Offenbarung der Erfindung

Diese Aufgabe wird durch ein Filterelement für einen Filter, insbesondere für Brennkraftmaschinen, zur Filtration eines Fluids, insbesondere von Luft, sowie durch einen entsprechenden Filter gemäß den unabhängigen Ansprüchen gelöst. Weitere Ausgestaltungen der Erfindung sind in den Unteransprüchen, der Beschreibung und den Figuren angegeben.

Das erfindungsgemäße Filterelement ist entlang einer Einführrichtung in einen Filter einführbar. Das Filterelement weist ein Filtermedium auf, das entlang einer Hauptströmungsrichtung durchströmbar ist. Das Filterelement weist eine Reinseite und eine Rohseite auf. Des Weiteren weist das Filterelement eine um das Filterelement umlaufende Dichtfläche auf. Die Dichtfläche trennt die Reinseite von der Rohseite, insbesondere bei einem Zusammenwirken der Dichtfläche mit einem Filtergehäuse eines Filters in einem Einbauzustand des Filterelements. Erfindungsgemäß weist das Filterelement eine Abstützkante oder Abstützfläche auf, die in Zusammenwirken mit einem Filtergehäuse eines Filters in einem Einbauzustand des Filterelements eine Kraft auf die Dichtfläche das Filterelement entlang der Hauptströmungsrichtung ausübt, wobei Dichtfläche und Abstützkante einen spitzen Winkel einschließen. Die Kraft auf die Dichtfläche kann bevorzugt in Hauptströmungsrichtung X ausgeübt werden.

Unter Dichtfläche wird vorliegend eine Fläche an dem Filterelement verstanden, die zur fluiddichten Abdichtung dient. Die Dichtfläche kann Teil einer Dichtung sein. Die Dichtung kann beispielsweise Teil des Filterelements sein oder die Dichtfläche dient lediglich als Anlagefläche für eine beispielsweise an einem Filtergehäuse angeordnete Dichtung. Es muss aber eine Einführung des Filterelements in ein Filtergehäuse entlang einer Einführrichtung möglich sein, bei der die Dichtfläche so zur Anlage an einem Filtergehäuse gelangt, dass zwischen Filtergehäuse und Filterelement entlang der Dichtfläche eine Dichtwirkung entsteht.

Die vorliegende Erfindung sieht anstelle eines zusätzlichen Gehäuse-elements, wie beispielsweise eine Schublade, ein Gehäusedeckel oder ein Trägerelement, das üblicherweise zum Anpressen und Fixieren eines Filterelements verwendet dient, eine Dichtflächen-Abstützkanten-Anordnung vor, die in das Filterelement integriert ist. Diese Maßnahme reduziert die benötigten Bauteile und stellt gleichzeitig ein zuverlässiges Anliegen der Dichtfläche sicher.

Um die benötigte hohe Dichtwirkung entlang der Dichtfläche des Filterelements zu erreichen, muss auf die Dichtfläche eine ausreichende Kraft ausgeübt werden. Gemäß der vorliegenden Erfindung wird diese dadurch aufgebracht, dass das Filterelement entlang einer Einführrichtung in einen Filter eingeführt wird. In dem Einbauzustand wird eine Kraft auf das Filterelement entlang der Einführrichtung ausgeübt, die durch die Geometrie des das Filterelement aufnehmenden Filtergehäuses auch auf die Dichtfläche übertragen wird. Je näher sich das Filterelement seinem Einbauzustand nähert, umso stärker wird durch diese Kraft eine sich auf der Dichtfläche befindliche oder an der Dichtfläche anliegende Dichtung komprimiert. Die Stärke und Richtung der Kraft auf die Dichtfläche wird entscheidend durch den Winkel bestimmt, den die Abstützkante mit der Dichtfläche einschließt. Die spitzwinklige Anordnung von Dichtfläche und Abstützkante stellt eine Optimierung zwischen zwei Zielsetzungen dar: Einerseits wird eine effektive Umsetzung einer auf das Filterelement in Einführrichtung ausgeübten Kraft in eine Kraft, die auf die Dichtfläche wirkt, angestrebt.

Dies wird durch einen möglichst kleinen Winkel zwischen Dichtfläche und Abstützkante erzielt. Anderseits soll eine dabei auftretende Verschiebung des Filterelements entlang der Dichtfläche relativ zu einem Filtergehäuse minimiert werden. Bei einer solchen Verschiebung steigt die auf eine Dichtung ausgeübte Kraft an, so dass eine ansteigende Scherbelastung auf eine Dichtung ausgeübt wird. Eine solche Verschiebung wir durch einen möglichst großen Winkel minimiert. Im Ergebnis muss ein Kompromiss zwischen einer auf die Dichtfläche ausgeübten Kraft und dem unter dieser Kraft zurückgelegten Verfahrweg gefunden werden. Die Erfindung sieht daher vor, dass ein spitzer Winkel zwischen der Dichtfläche und der Abstützkante eine Optimierung dieses Kompromisses ermöglicht und so eine deutlich höhere Dichtkraft auf eine Dichtung ausgeübt werden kann, bevor die maximale Scherkraft überschritten wird.

Für die vorliegende Erfindung wurde weiter erkannt, dass ein bestimmter Winkelbereich zwischen Dichtfläche und Abstützkante einen entscheidenden Beitrag zur Optimierung leisten kann. Es ist erfindungsgemäß, dass Dichtfläche und Abstützkante einen Winkel größer oder gleich 20° und kleiner oder gleich 30° und insbesondere einen Winkel von 22° ± 2° einschließen.

Diese Ergebnisse sind das Resultat einer eingehenden Betrachtung der Kräfteumsetzung von Filterelement auf Dichtfläche. Setzt man unter Berücksichtigung der Winkelverhältnisse, der Reibungskoeffizienten und der auf das Filterelement ausgeübten Kraft ein Kräftegleichgewicht an, so ergibt sich

$$F_Z = F_D(\mu_D \cos(\alpha) + \sin(\alpha) + (\mu_D \sin(\alpha) + \cos(\alpha)) \frac{\sin(\beta) + \mu_K \cos(\beta)}{\cos(\beta) - \mu_K \sin(\beta)})$$

wobei

$F_Z$     die Zuspannkraft ist, die auf das Filterelement im eingebauten Zustand insbesondere von einem Gehäusedeckel ausgeübt wird,

$F_D$     die Kraft ist, die maximal auf eine auf der Dichtfläche angeordneten Dichtung ausübbar ist,

$\mu_D$     der Reibungskoeffizient zwischen Dichtung und einem Filtergehäuse ist,

$\mu_K$     der Reibungskoeffizient zwischen der Abstützkante und einem Filtergehäuse ist,

$\alpha$     der Winkel zwischen der Einführrichtung und der Dichtfläche ist und

$\beta$     der Winkel zwischen der Einführrichtung und der Abstützkante.

Für eine Optimierung hinsichtlich der Winkel $\alpha$ und $\beta$ wurde die Formel mit Hilfe der Kleinwinkelnäherung

$$\sin(x) = x$$

$$\cos(x) = 1$$

vereinfacht

$$F_Z = F_D(\mu_D + \alpha) + \frac{F_D(\alpha \mu_D + 1)(\delta \beta + \mu_K)}{1 - \delta \beta \mu_K}$$

und nach dem Winkel $\beta$ aufgelöst:

$$\beta = \bar{\delta} \frac{-\alpha + \frac{F_Z}{F_D} - \mu_D - \mu_K - \alpha \mu_D \mu_K}{1 + \alpha \mu_D - \alpha \mu_K + \frac{F_Z}{F_D} \mu_K - \mu_D \mu_K}$$

wobei

$$\bar{\delta} = 1/\delta.$$

Entgegen der Erwartungen liefert die Kleinwinkelnäherung auch bis zum Bereich von 30° gute Näherungswerte.

Die Ergebnisse können durch das Einführen eines Korrekturfaktors δ=1,0... 1,2 noch verbessert werden, wie eine empirische Überprüfung ergab. Der oben genannte Winkelbereich von 20°...30° wurde als überraschendes Ergebnis einer Multiparameteroptimierung dieser Beziehung ermittelt. Es wurden die sich ergebenden Abhängigkeiten $\beta(F_Z, F_D)$, $\beta(\mu_D, \mu_K)$ für die gängigen Parameterbereiche evaluiert. Dabei hat sich überraschenderweise herausgestellt, dass innerhalb der üblicherweise zur Anwendung kommenden Parameterbereiche für $F_Z$, $F_D$, $\mu_D$ und $\mu_K$ insbesondere bei konstantem $\alpha = 0$ ein enger Winkelbereich von 20°...30° alle Randbedingungen erfüllt. Dies ergibt sich aus der nachfolgend dargestellten Tabelle:

| $F_Z$/N | $\beta(F_Z)$ | $F_D$/N | $\beta(F_D)$ | $\mu_D$ | $\beta(\mu_D)$ | $\mu_K$ | $\beta(\mu_K)$ |
|---|---|---|---|---|---|---|---|
| 200 | -34,60 | 100 | 84,64 | 1,00 | 52,98 | 0,00 | 30,51 |
| 220 | -28,08 | 105 | 78,49 | 1,05 | 51,10 | 0,01 | 29,83 |
| 240 | -21,73 | 110 | 72,72 | 1,10 | 49,19 | 0,02 | 29,16 |
| 260 | -15,55 | 115 | 67,29 | 1,15 | 47,27 | 0,03 | 28,50 |
| 280 | -9,54 | 120 | 62,17 | 1,20 | 45,33 | 0,04 | 27,85 |
| 300 | -3,67 | 125 | 57,33 | 1,25 | 43,36 | 0,05 | 27,21 |
| 320 | 2,04 | 130 | 52,76 | 1,30 | 41,38 | 0,06 | 26,57 |
| 340 | 7,61 | 135 | 48,42 | 1,35 | 39,38 | 0,07 | 25,95 |
| 360 | 13,04 | 140 | 44,32 | 1,40 | 37,36 | 0,08 | 25,33 |
| 380 | 18,34 | 145 | 40,41 | 1,45 | 35,32 | 0,09 | 24,71 |
| 400 | 23,51 | 150 | 36,70 | 1,50 | 33,26 | 0,10 | 24,11 |
| 420 | 28,55 | 155 | 33,17 | 1,55 | 31,18 | 0,11 | 23,51 |
| 440 | 33,48 | 160 | 29,80 | 1,60 | 29,08 | 0,12 | 22,92 |
| 460 | 38,29 | 165 | 26,58 | 1,65 | 26,95 | 0,13 | 22,33 |
| 480 | 42,99 | 170 | 23,51 | 1,73 | 23,51 | 0,14 | 21,75 |
| 500 | 47,59 | 175 | 20,57 | 1,75 | 22,64 | 0,15 | 21,18 |
| 520 | 52,07 | 180 | 17,76 | 1,80 | 20,45 | 0,16 | 20,62 |
| 540 | 56,46 | 185 | 15,06 | 1,85 | 18,23 | 0,17 | 20,06 |
| 560 | 60,76 | 190 | 12,48 | 1,90 | 16,00 | 0,18 | 19,50 |

Für die Berechnung wurde der Korrekturfaktor $\overline{\delta}$ aus empirisch ermittelten Daten mit 1,17 gewählt. Ausgehend von dem vergleichsweise schmalen Winkelkorridor, den die Abhängigkeit $\beta(\mu_K)$ im Rahmen der üblichen Parameterbereiche bietet, wurden nach und nach die verbleibenden Winkelbereiche, die sich aus den anderen Abhängigkeiten im Rahmen üblicher Parameterbeiche ergeben, auf diesen Korridor hin evaluiert. Überraschenderweise hat sich der Winkelkorridor 20°-30° als für alle Abhängigkeiten erfüllbar herausgestellt. Die Bereiche, die im Rahmen der Evaluierung ausgenommen wurden oder deren Werte nicht gültig sind - wie beispielsweise ein negativer Winkel $\beta$ - wurden kursiv gekennzeichnet. Des Weiteren hat sich herausgestellt, dass trotz des relativ hohen Unterschieds in den Reibungskoeffizienten an der Dichtfläche und an der Abstützkante die opimale Winkelsumme $\alpha+\beta$ bei verschiedenen Werten für den Winkel $\alpha$ nahezu konstant ist. Dies ist beispielhaft für den Wertesatz $F_Z$=400 N, $F_D$=170 N, $\mu_D$=1,73 und $\mu_K$=0,11 in nachfolgender Tabelle dargestellt:

| $\alpha$ | $\beta(\alpha)$ | $\alpha+\beta$ |
|---|---|---|
| 0,00 | 23,51 | 23,51 |
| 1,00 | 21,97 | 22,97 |
| 2,00 | 20,52 | 22,52 |
| 3,00 | 19,13 | 22,13 |

(fortgesetzt)

| $\alpha$ | $\beta(\alpha)$ | $\alpha+\beta$ |
|---|---|---|
| 4,00 | 17,81 | 21,81 |
| 5,00 | 16,56 | 21,56 |
| 6,00 | 15,36 | 21,36 |
| 7,00 | 14,21 | 21,21 |
| 8,00 | 13,12 | 21,12 |
| 9,00 | 12,07 | 21,07 |
| 10,00 | 11,06 | 21,06 |
| 11,00 | 10,10 | 21,10 |
| 12,00 | 9,17 | 21,17 |
| 13,00 | 8,28 | 21,28 |
| 14,00 | 7,43 | 21,43 |
| 15,00 | 6,60 | 21,60 |
| 16,00 | 5,81 | 21,81 |
| 17,00 | 5,05 | 22,05 |
| 18,00 | 4,32 | 22,32 |

Es ist somit erfindungsgemäß möglich, innerhalb des beanspruchten Winkelbereichs weitgehend unabhängig von dem Winkel $\alpha$ zwischen der Dichtfläche und der Einführrichtung die Geometrie des Filterelements Einführrichtung die Geometrie des Filterelements zu optimieren. Es kann somit beispielsweise der relative Verfahrweg optimiert werden. Bei einem kleineren Winkel $\alpha+\beta$ entsteht ein längerer Verfahrweg, bei einem größeren Winkel $\alpha+\beta$ entstehen höhere Montagekräfte. Dies ergibt sich aus einer Betrachtung des Verfahrwegs r der Dichtungsfläche relativ zum Gehäuse, wie beispielhaft für den Winkelbereich 0°...27,5° nachfolgend dargestellt. Es ist zu erkennen, dass erst im Bereich von $\alpha+\beta>18,5°$ Werte für den Verfahrweg r von 12 mm oder weniger auftreten, die als akzeptabel gesehen werden können:

| $\alpha+\beta$ | r/mm |
|---|---|
| 0,50 | 458,37 |
| 2,00 | 114,61 |
| 3,50 | 65,52 |
| 5,00 | 45,89 |
| 6,50 | 35,33 |
| 8,00 | 28,74 |
| 9,50 | 24,24 |
| 11,00 | 20,96 |
| 12,50 | 18,48 |
| 14,00 | 16,53 |
| 15,50 | 14,97 |
| 17,00 | 13,68 |
| 18,50 | 12,61 |
| 20,00 | 11,70 |
| 21,50 | 10,91 |

(fortgesetzt)

| α+β | r/mm |
|---|---|
| 23,00 | 10,24 |
| 24,50 | 9,65 |
| 26,00 | 9,12 |
| 27,50 | 8,66 |

Aus dieser Betrachtung hat sich als besonders bevorzugter Winkel (α+β) der Wert von 20° bis 26°, bevorzugt 22° ± 2° herausgestellt.

Eine weitere Ausführungsform sieht vor, dass die Abstützkante seitlich, ober- oder unterhalb außerhalb des durchströmten Bereichs des Filterelements angeordnet ist. Somit findet keine Reduzierung des wirksamen Querschnitts der durchströmten Oberfläche des Filterelements statt. Gleichzeitig ist eine gute Einprägung der Kraft auf die Dichtfläche möglich.

Eine weitere vorteilhafte Ausführungsform der Erfindung sieht vor, dass das Filtermedium eine Anströmfläche und eine Abströmfläche aufweist, wobei die Abströmfläche in Hauptströmungsrichtung zumindest teilweise stromabwärts der Dichtfläche angeordnet ist. Bereits bei einer geringen Verkippung der Dichtfläche gegenüber der Einführrichtung ragt zumindest ein Teil der Abströmfläche über die Dichtfläche hinaus. Dies stellt eine vorteilhafte Nutzung des zur Verfügung stehenden Bauraums dar.

Erfindungsgemäß kann vorgesehen sein, dass die Abstützkante Teil einer Abstützstruktur ist, wobei die Abstützstruktur eine längliche Ausdehnung in Einführrichtung aufweist. Alternativ oder zusätzlich kann die Abstützstruktur V-förmig ausgebildet sein und in einer stumpfen Spitze auslaufen. Abstützkante und Dichtfläche treffen sich also nicht. Vorteilhafterweise verjüngt sich die Abstützstruktur in Einführrichtung. Die längliche Ausdehnung der Abstützstruktur in Einführrichtung gewährleistet ein über die gesamte Ausdehnung des Filterelements in Einführrichtung erfolgendes zuverlässiges Anpressen der Dichtfläche an das Filtergehäuse. Die V-Form bildet den spitzen Winkel zwischen Dichtfläche und Abstützkante. Unter einer stumpfen Spitze wird vorliegend eine Abrundung oder ein geradliniges Abschneiden des geringsten Abstandes der Dichtfläche und der Abstützkante verstanden.

Vorzugsweise ist vorgesehen, dass die Abstützstruktur zweiteilig ausgeführt ist. Eine erste Abstützstruktur befindet sich auf einer Seite der Hauptströmungsrichtung, eine zweite Abstützstruktur befindet sich gegenüberliegend der ersten Abstützstruktur auf der anderen Seite der Hauptströmungsrichtung. Somit erfolgt beidseitig des Filterelements eine gleichförmige Anpressung der Dichtfläche. Alternativ oder zusätzlich kann eine dritte und/oder vierte Abstützstruktur oder Abstützbereich unterhalb und/oder oberhalb der Hauptströmungsrichtung vorgesehen sein, der eine Anpressung der Dichtfläche auch unterhalb ermöglicht.

Eine weitere vorteilhafte Ausführungsform der Erfindung sieht vor, dass die Dichtfläche Teil der Abstützstruktur ist, wobei insbesondere eine Projektion der Abstützkante in Hauptströmungsrichtung auf der Dichtfläche zu liegen kommt. Es ist somit gewährleistet, dass die Abstützkante in Hauptströmungsrichtung Kraft auf die Dichtfläche übertragen kann und so die Kraft senkrecht auf die Dichtfläche eingeleitet werden kann.

Bei einer Ausführungsform ist vorgesehen, dass das Filtermedium ein gefaltetes Filtermedium oder/und quaderförmig ist. Die Faltung des Filtermediums insbesondere in Quaderform ist besonders für große Filterelemente von Vorteil.

Die Vorteile der vorliegenden Erfindung finden insbesondere bei Ausführungsformen Geltung, bei denen das Filterelement im unbeladenen Zustand mehr als 2 kg oder/und im beladenen Zustand mehr als 4 kg wiegt. Insbesondere bei Filterelementen mit hohem Eigengewicht treten die genannten Dichtungsprobleme auf und können so mittels der Erfindung gelöst oder gemildert werden.

Der Erfindungsgedanke findet außerdem in einem Filter zur Filterung eines Fluids Anwendung, wobei der Filter ein Filtergehäuse zur Aufnahme eines Filterelements entlang einer Einführrichtung aufweist. Das Filtergehäuse ist entlang einer Hauptströmungsrichtung durchströmbar und weist eine Reinseite, eine Rohseite und eine Gehäusedichtfläche auf, die in Zusammenwirken mit einem Filterelement in einem Einbauzustand des Filterelements die Reinseite von der Rohseite trennt. Ferner weist das Filtergehäuse eine Abstützkante auf, die in Zusammenwirken mit einem Filterelement in einem Einbauzustand des Filterelements eine Kraft auf das Filterelement entlang der Hauptströmungsrichtung ausübt, wobei Gehäusedichtfläche und Führungsfläche einen spitzen Winkel einschließen. Somit wird die auf das Filterelement im Einbauzustand ausgeübte Kraft über die Führungsfläche an die Abstützkante und damit auch an die gegenüberliegende Dichtfläche übertragen.

Erfindungsgemäß ist vorgesehen, dass die Führungsfläche mit der Gehäusedichtfläche einen Winkel ≥ 20° und ≤ 30° und insbesondere einen Winkel von 22° ± 2° einschließt.

Erfindungsgemäß ist bei einer Ausführungsform des Filters eine Filterelementspannvorrichtung vorgesehen, die im Einbauzustand des Filterelements eine Kraft auf das Filterelement in Richtung der Einführrichtung ausübt. Die Filterelementspannvorrichtung prägt somit auf das Filterelement eine Kraft ein, die über Abstützkante und Dichtfläche an das Filtergehäuse übertragen wird.

**Kurze Beschreibung der Zeichnungen**

Die Erfindung wird nun unter Bezugnahme auf die Zeichnungen näher erläutert. Es zeigen:

Figur 1      eine perspektivische Aufrissdarstellung eines erfindungsgemäßen Filters;

Figur 2      eine seitliche Aufrissdarstellung eines erfindungsgemäßen Filters;

Figur 3      eine weitere seitliche Aufrissdarstellung eines erfindungsgemäßen Filters;

Figur 4      eine erste seitliche Darstellung eines erfindungsgemäßen Filterelements;

Figur 5      eine zweite seitliche Darstellung eines erfindungsgemäßen Filterelements;

Figur 6      eine seitliche Darstellung eines erfindungsgemäßen Filterelements mit angedeuteter alternativer Winkelkonfiguration,

Figur 7      eine perspektivische Darstellung einer alternativen Ausführungsform eines erfindungsgemäßen Filterelements,

Figur 8      eine Schnittdarstellung entlang der Ebene VIII-VIII' in Figur 7;

Figur 9      eine Draufsicht auf eine alternative Ausführungsform eines erfindungsgemäßen Filters;

Figur 10    eine Schnittansicht des Filters der Figur 9 entlang der Ebene X-X mit einem eingesetzten Filterelement in einer ersten Position;

Figur 11    die Schnittansicht des Filters der Figur 9 entlang der Ebene X-X mit einem eingesetzten Filterelement in einer zweiten Position;

Figur 12    eine Schnittansicht des Filters der Figur 9 entlang einer Ebene senkrecht zur Einführungsrichtung.

**Ausführungsform(en) der Erfindung**

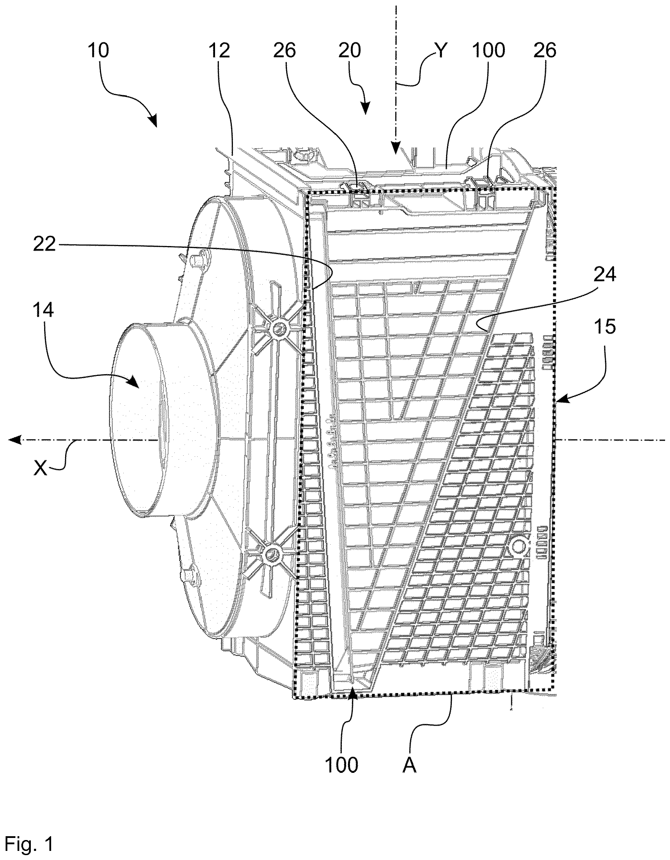

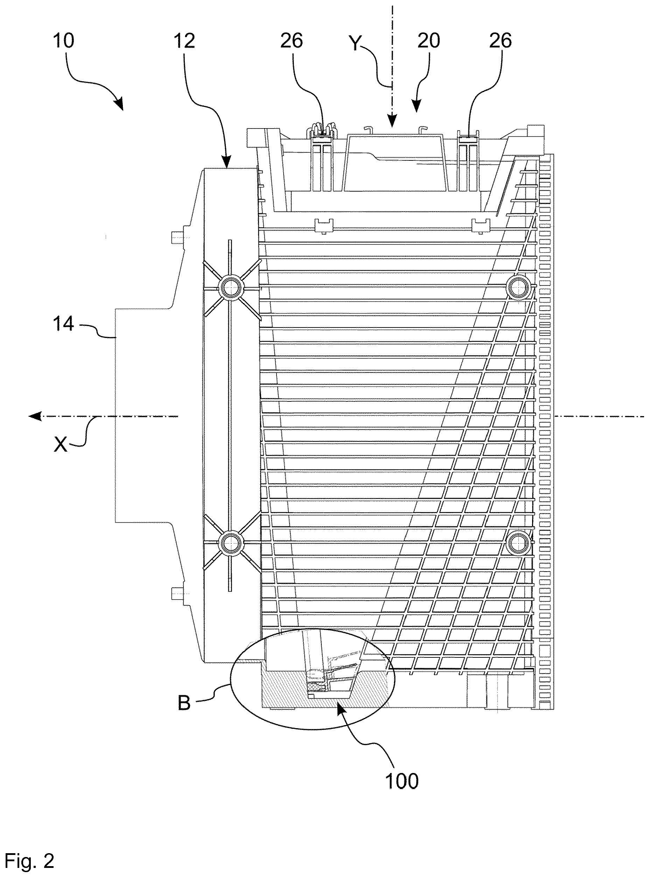

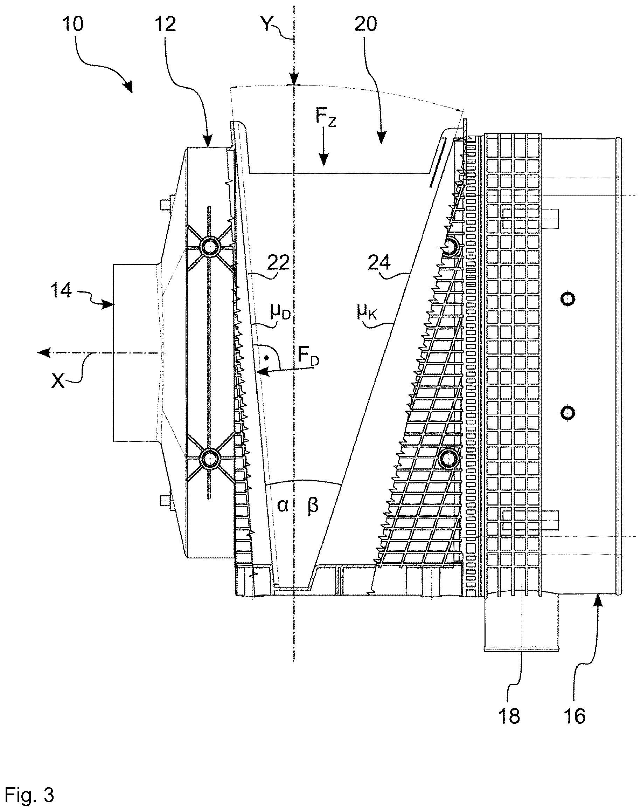

Die Figuren 1 bis 3 zeigen schematische Darstellungen eines erfindungsgemäßen Filters 10. Der Filter 10 weist ein Filtergehäuse 12 auf, welches entlang einer Hauptströmungsrichtung X durchströmt wird. In Figur 1 ist der dem Betrachter zugewandte Teil des Filtergehäuses 12 innerhalb der gestrichelten Umrandung A weggelassen, um die Anordnung eines darin befindlichen Filterelements 100 zu veranschaulichen. In Figur 2 ist speziell in einem aufgerissen dargestellten Bereich B die Anordnung eines Filterelements 100 in zwei verschiedenen Einführstellungen gezeigt. In Figur 3 ist das Filtergehäuse ebenfalls aufgerissen dargestellt, im Unterschied zur Figur 1 ist kein Filterelement 100 in dem Filtergehäuse 12 angeordnet.

In den Figuren 1 bis 3 ist eine Abströmöffnung 14 in dem Filtergehäuse 12 gezeigt. Die Zuströmöffnung 15 befindet entgegen der Hauptströmungsrichtung X am gegenüberliegenden Ende des Gehäuses 12. In Figur 3 ist der Zuströmöffnung ein Zyklonblock 16 vorgelagert, der in einer alternativen Ausführungsform zu der der Figuren 1 und 2 vorgesehen sein kann. Der Zyklonblock 16 weist eine Grobabscheidungsöffnung 18 auf, über die flüssige oder feste Stoffe, die in dem Zyklonblock 16 vorabgeschieden worden sind, aus dem Gehäuse 12 entfernt werden können.

Die Grobabscheidungsöffnung 18 kann sowohl in Einführrichtung Y nach unten oder für eine seitliche Montage des Filters 10 senkrecht zu der Einführrichtung Y seitlich angeordnet sein. Für eine Überkopfmontage bei von unten zugänglicher Einführöffnung 20 kann die Grobabscheidungsöffnung 18 entsprechend auf der Zeichnung oben, d.h, neben der Grobabscheidungsöffnung 18 angeordnet sein.

Das Filtergehäuse 12 weist in den Figuren 1 bis 3 an der Oberseite eine Einführöffnung 20 auf, über die ein Filterelement 100 in den Filter 10 eingeführt werden kann. Unter einem Filterelement soll vorliegend ein wechselbar in einem Filtergehäuse anordenbares Element verstanden werden. Ein solches Element wird auch als Filtereinsatz bezeichnet. Das Filterelement 100 besitzt in dieser bevorzugten Ausführungsform eine im Wesentlichen quaderförmige Geometrie mit einer langen Kante 112 und einer kurzen Kante 114. Das Filterelement wird entlang der langen Kante 112 in das Filtergehäuse 12 eingeführt, die Einführöffnung 20 befindet sich dann an der kurzen Kante 114 des Filterelements. Die Geometrie der Einführöffnung 20 definiert eine Einführrichtung Y, die im Wesentlichen senkrecht zur Hauptströmungsrichtung X steht. Je nach Innengeometrie des Filtergehäuses 12 und der entsprechenden Geometrie des Filterelements 100 kann der Winkel zwischen der Einführrichtung Y und der Hauptströmungsrichtung X abweichend von 90° sich in einem Winkelbereich zwischen 80 und 100° bewegen. Bei dem Einführen des Filterelements 100 in das Filtergehäuse 12 sind gelangt ein Filterelement 100 unter anderem mit einer Gehäusedichtfläche 22 und einer Führungsfläche 24 in Kontakt. Bevorzugt ist die Dichtung an dem Filterelement 100 angebracht und die Gehäusedichtfläche 22 dient als Anlagefläche für die Dichtung des Filterelements 100. Bei der Führungsfläche 24 kann es sich um eine Gehäusestufe in dem Filtergehäuse 12 handeln. Dabei kann das Filterelement 100 an der Kante einer solchen Stufe oder an der Fläche einer solchen Stufe zur Anlage gelangen. Die Führungsfläche 24 muss nicht notwendigerweise durchgehend ausgebildet sein. Sie kann abschnittsweise unterbrochen oder lediglich aus einzelnen Führungsflächenabschnitten bestehen.

Gehäusedichtfläche 22 und Führungsfläche 24 bilden eine V-förmige Geometrie. Diese Anordnung ist besonders gut in Figur 3 ersichtlich. In der vorliegenden Ausführungsform weisen sowohl die Gehäusedichtfläche 22 als auch die Führungsfläche 24 einen Winkel gegenüber der Einführrichtung Y auf. Der Winkel zwischen der Gehäusedichtfläche 22 und der Einführrichtung Y ist mit $\alpha$ bezeichnet, der Winkel zwischen der Führungsfläche 24 und der Einführrichtung Y mit $\beta$. Gehäusedichtfläche 22 und Führungsfläche 24 treffen innerhalb des Filtergehäuses 12 nicht direkt aufeinander. Stattdessen ist die V-förmige Geometrie mit einer stumpfen Spitze versehen.

Bei der Ermittlung der in der allgemeinen Beschreibung genannten Formel wurde der Reibungskoeffizient zwischen Filtergehäuse 12 und einer daran anliegenden Dichtung mit $\mu_D$ bezeichnet, der Reibungskoeffizient zwischen dem Filtergehäuse 12 und einer Kante eines darin befindlichen Filterelements 100 mit $\mu_K$ bezeichnet. $F_D$ bezeichnet die Kraft, die auf die Gehäusedichtfläche 22 bzw. auf die daran anliegende Dichtung ausgeübt wird. $F_D$ wird als senkrecht auf die Gehäusedichtfläche 22 ausgeübt angenommen. Diese Zusammenhänge sind in Figur 3 explizit eingezeichnet.

Wie aus den Figuren 1 und 2 ersichtlich ist, weist das Filtergehäuse 12 ferner eine Filterelementspannvorrichtung 26 in Form mehrerer im Bereich der Einführöffnung 20 angeordneter Spannverschlüsse oder Spannverschlusslager auf. Über die Filterelementspannvorrichtung 26 wird eine Kraft Fz auf ein in dem Filtergehäuse 12 befindliches Filterelement 100 ausgeübt. Diese Zuspannkraft Fz ist in Figur 3 dargestellt.

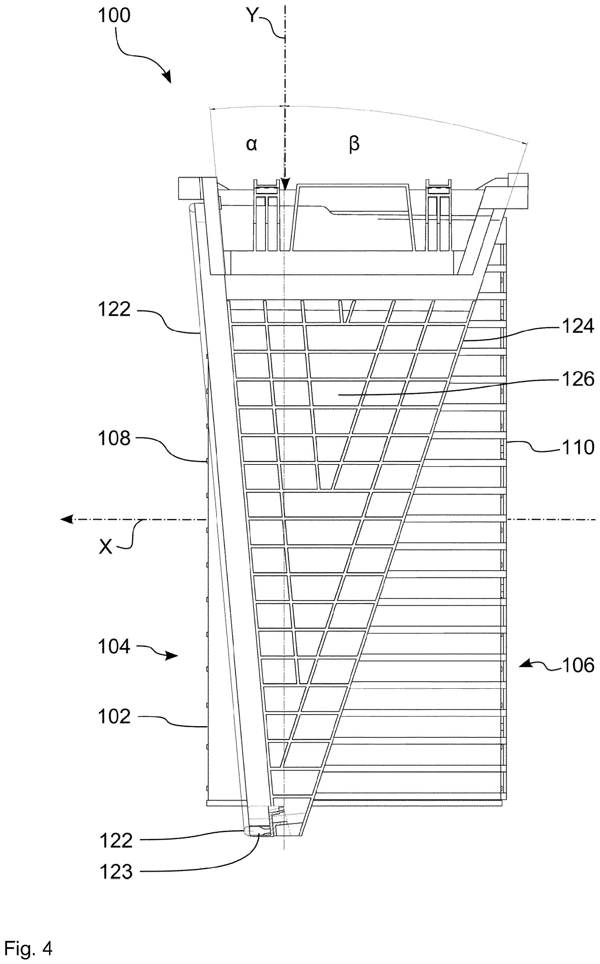

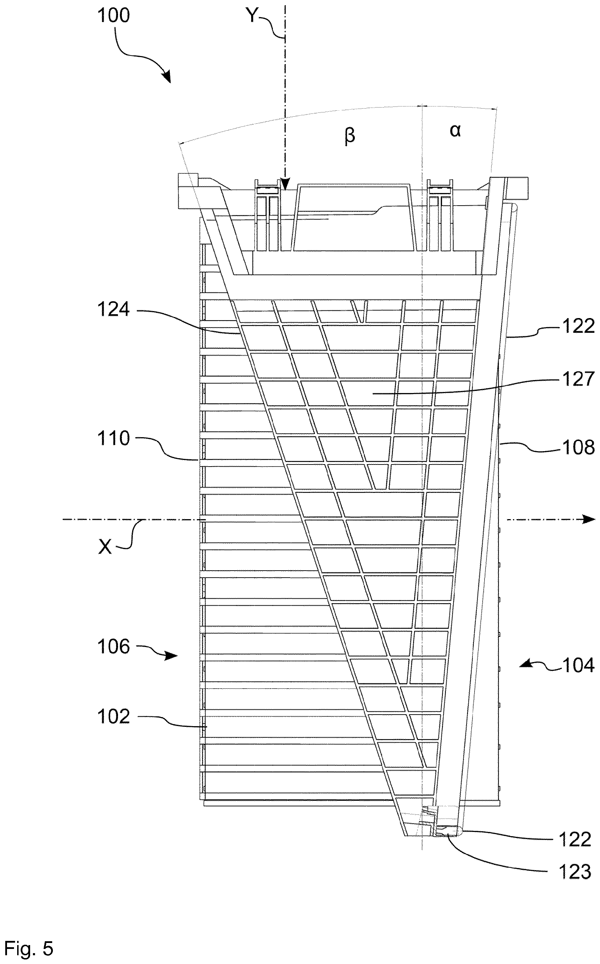

In Figur 2 ist in dem Aufriss A der Einführvorgang des Filterelements 100 dargestellt. Es wird jedoch zunächst der Aufbau des Filterelements 100 anhand der Figuren 4 und 5 erläutert, bevor auf den Aufriss A und den dort dargestellten Einführvorgang näher eingegangen wird.

Die Figuren 4 bis 6 zeigen ein erfindungsgemäßes Filterelement 100. Das Filterelement 100 ist entlang der Einführrichtung Y in einen Filter 10, wie er beispielsweise in den Figuren 1 bis 3 dargestellt ist, einführbar. Das Filterelement 100 weist eine Anströmfläche 110, eine Abströmfläche 108 sowie einen als gefalteten Balg ausgeführten Filterkörper 102 auf. Die Faltung des Filterbalgmediums ist im Wesentlichen zick-zack-förmig. Bevorzugt verlaufen die Faltkanten längs oder quer zu der Einführrichtung Y. Ein erster Teil der Faltkanten bildet die Anströmfläche 110, ein zweiter, dem ersten Teil gegenüberliegender Teil der Faltkanten bildet die Abströmfläche 108 des Filterelements 100. Durch ein Abdichten der Stirnseiten der Faltkanten wird ein Überströmen des zu filternden Fluids verhindert.

Alternativ kann der Filterkörper 102 als Schichtung aus einer Welllage und einer Glattlage des Filtermediums gebildet sein. Die sich so ausbildenden Filterkanäle sind bevorzugt in Hauptströmungsrichtung X angeordnet. Jeder Filterkanal ist an einer seiner beiden Stirnseiten verschlossen, an jeder Stirnseite sind die dort endenden Filterkanäle abwechselnd verschlossen oder offen. Diese Struktur wird verschiedentlich auch als Z-Filter bezeichnet.

Der Filterkörper 102 weist eine Tragstruktur 116 auf, die dem Filterelement 100 zusätzlich mechanische Stabilität verleiht. In die Tragstruktur 116 integriert ist eine beidseitige Abstützstruktur 126, 127. die Tragstruktur 116 kann vorzugsweise den Filterkörper 102 umlaufen und ist vorzugsweise unteilbar mit dem Filterkörper 102 bzw. dem Filterelement 100 verbunden. Die Abstützstruktur 126, 127 weist eine Dichtfläche 122 und eine Abstützkante 124 auf, die Teil der Abstützstruktur 126, 127 sind. Dichtfläche 122 und Abstützkante 124 sind V-förmig angeordnet. Der Winkel zwischen der Einführrichtung Y und der Dichtfläche 122 ist mit $\alpha$ bezeichnet, der Winkel zwischen Abstützkante 124 und der Einführrichtung Y ist mit $\beta$ bezeichnet. Die Dichtfläche 122 ist in der vorliegenden Ausführungsform Teil einer Dichtung 123. Die Dichtung 123 läuft um das Filterelement 100 um und dichtet das Filterelement 100 gegenüber dem Filtergehäuse 12 ab. Es ergibt sich somit für das Filterelement 100 eine Reinseite 104 und eine Rohseite 106. Dichtfläche 122 und Abstützkante 124 bilden einen spitzen Winkel $\alpha+\beta$, wobei die Spitze des Winkels sich in Richtung der Einführrichtung Y befindet. In der vorliegenden Ausführungsform weist der Winkel 23° auf und ergibt sich als Summe aus den Winkeln $\alpha$ und $\beta$. $\alpha$ ist in der vorliegenden Ausführungsform mit 5° gewählt, $\beta$ beträgt ca. 18°. Selbstverständlich sind auch andere Kombinationen denkbar, wie beispielsweise $\alpha = 0{,}5°$ und $\beta = 22{,}5°$.

Wie aus den Figuren 4 und 5 ersichtlich ist, befindet sich ein Teil der reinseitigen Abströmfläche des Filterkörpers 102 auf der Reinseite 104 des Filterelements und somit in Hauptströmungsrichtung stromabwärts der Dichtfläche 122. Die Abstützkante 124 und die Dichtfläche 122 befinden sich außerhalb des von einem Fluid durchströmten Bereichs des Filtermediums 102. Die aus Abstützkante 124 und Dichtfläche 122 gebildete Abstützstruktur 126, 127 ist beidseitig der Hauptströmungsrichtung X an dem Filterelement 100 angeordnet. Im Einbauzustand kommt die Abstützkante 124 an der Führungsfläche 24 des Filtergehäuses 12 zu liegen, die Dichtfläche 122 mit der Dichtung 123 kommt an der Gehäusedichtfläche 22 zu liegen. Während eines solchen Einführvorgangs wird die Dichtung 123 komprimiert und gleitet an der Gehäusedichtfläche 22 entlang. Dies ist im Aufriss A der Figur 2 in zwei exemplarisch gezeigten Stellungen dargestellt. Aufgrund der Kompression der Dichtung 123 wird die Kraft $F_D$ auf die Dichtung 123 ausgeübt und verursacht eine Reibung und Verformung an der Dichtung 123.

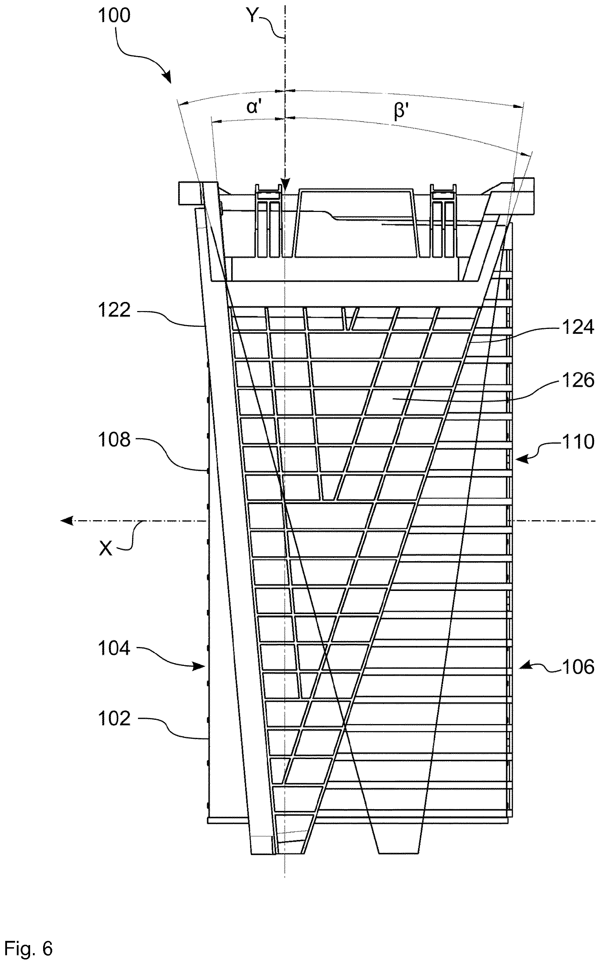

Figur 6 zeigt schematisch eine alternative Winkelkonstellation, bei der der Winkel a' größer und der Winkel β' kleiner gewählt wurden.

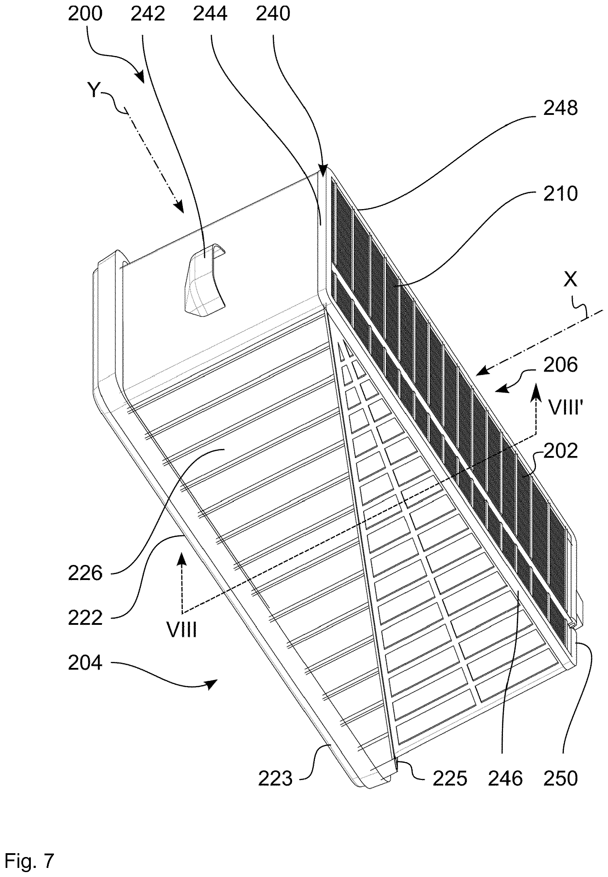

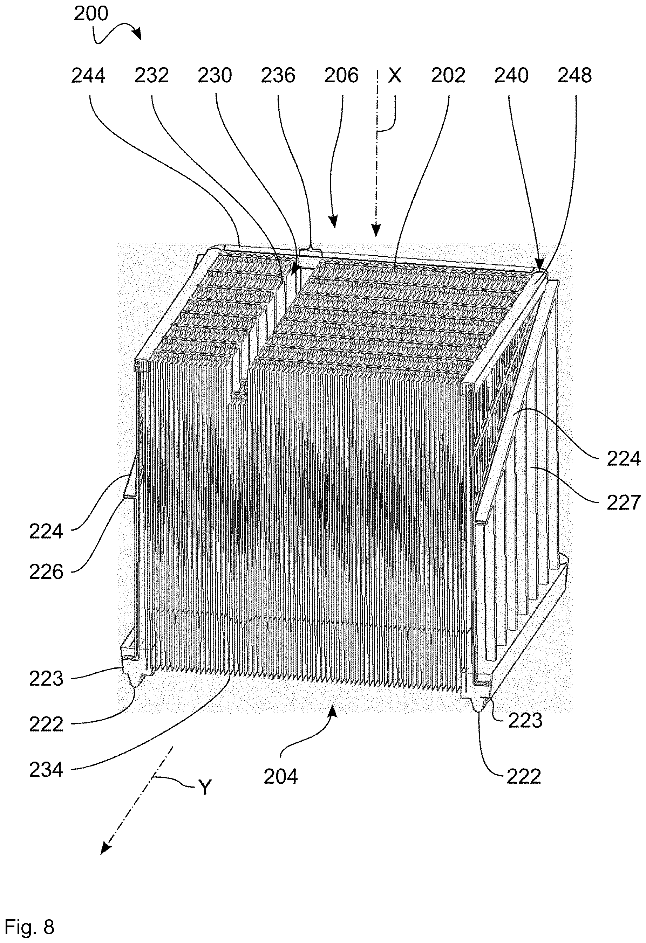

In den Figuren 7 und 8 ist eine alternative Ausführungsform eines erfindungsgemäßen Filterelements 200 dargestellt. Im Unterschied zu den Ausführungsformen der Figuren 4 und 5 bzw. 6 wurde bei der Ausführungsform der Figuren 7 und 8 der Winkel zwischen der Dichtfläche 222 und dem Filtergehäuse 12 sehr klein gewählt. In der vorliegenden Ausführungsform des Filterelements 200 ist der Winkel $\alpha$ = 0,5°. Entsprechend beträgt der Winkel $\beta$ zwischen der Abstützkante 224 der Abstützstruktur 226, 227 und dem Filtergehäuse 23°. In Figur 8 ist eine Querschnittsansicht entlang der Ebene VIII - VIII' der Figur 7 gezeigt. Es ist in der Schnittdarstellung der Figur 8 gut der Verlauf der Faltkanten des Filterkörpers 202 ersichtlich. Die Falten 230 verlaufen im Wesentlichen parallel zur Einführrichtung Y. Eine Faltkante 232 der Falte 230 befindet sich auf der Rohseite 206 des Filterelements 200, die gegenüberliegende Faltkante 234 befindet sich auf der Reinseite 204 des Filterelements 200.

In einem Bereich 236, der sich quer zur Einführrichtung Y über einen Teil der Rohseite 206 und entlang der gesamten Länge in Einführrichtung Y erstreckt, sind eine Reihe von Falten 230 mit geringerer Höhe ausgeführt, sodass sich eine Vertiefung parallel zur Einführrichtung Y auf der Rohseite 206 des Filterelements 200 ergibt. Diese Vertiefung im Bereich 236 ermöglicht eine zusätzliche Fixierung des Filterelements 200 bei Vibrationen, indem in diesem Bereich 236 ein gehäuseseitiger Steg eingreift.

Der Filterkörper 202 ist auf der Rohseite 206 umlaufend mit einem gießbaren Material wie etwa Polyurethan versteift. Diese Versteifung 240 läuft auf der rohseitigen Anströmfläche 210 des Filterelements 200 um. Insbesondere ummantelt die Versteifung 240 die rohseitige obere Querkante 244 und die beiden rohseitgen Längskanten 246, 248 teilweise oder vollständig. Hierbei wird insbesondere auch die Tragstruktur 226, 227 mit der Versteifung 240 und dem Filterkörper 202 mittels des gießbaren Materials fest verbunden. Dies versteift die rohseitige Anströmfläche 210 und bietet Schutz gegen Stöße bei der Handhabung des Filterelements 200, wie beispielsweise bei Transport oder Einbau. Bei der Herstellung des Stoßschutzes 240 wird das Filterelement 200, insbesondere der Filterkörper 202 in eine vorbereitete und mit dem Material gefüllte Schale eingelegt. Das Material wird aufgeschäumt und härtet aus. Bei dem Schäumungsvorgang wird ein Teil des Filtermediums des Filterkörpers 202 durchdrungen, sodass eine feste Verbindung zwischen dem Stoßschutz 240 und dem Filterkörper 202 entsteht.

In ähnlicher Weise wird die in Hauptströmungsrichtung X gegenüberliegende Dichtung 232 hergestellt. Durch die Form der Schale ergibt sich die Form der Dichtfläche 222 der Dichtung 232. Hierbei wird insbesondere auch die Tragstruktur 226, 227 mit der Dichtung 232 und dem Filterkörper 202 mittels des Dichtungsmaterials fest verbunden.

Wie in Figur 7 ersichtlich ist die Abstützfläche 224 nicht nur seitlich neben dem Filterkörper 202 ausgebildet, sondern auch unterhalb des Filterkörpers 202. Dieser sich unterhalb des Filterkörpers 202 befindliche Teil 225 der Abstützfläche 224 übt ebenfalls Kraft auf die Dichtung 223 bzw. die Dichtfläche 222 in der Einbaustellung des Filterelements 200 aus. In der Oberseite des Filterelements 202 ist ein Griff 242 vorgesehen, der eine Entnahme des Filterelements 200 aus einem Filtergehäuse erleichtert. Insbesondere sind bei der Ausführungsform der Figur 7 und 8 an der genannten Oberseite des Filterelements 200 keine Befestigungs- oder Spannelemente vorgesehen. Diese sind bei dieser Ausführungsform an dem Filtergehäuse, beispielsweise an einem Deckel eines Filtergehäuses, vorgesehen.

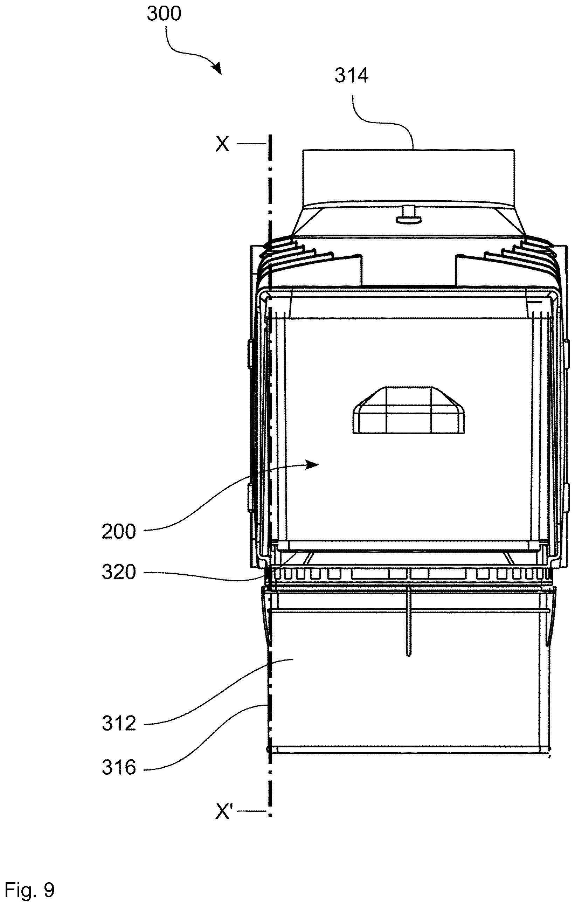

Die Figuren 9 bis 12 zeigen eine alternative Ausführungsform eines erfindungsgemäßen Filters 300. Der Filter 300 ist zur Aufnahme des Filterelements 200 geeignet, d.h. er weist eine entsprechende Winkelkonfiguration für die Winkel $\alpha$ und $\beta$ auf. Der Filter 300 weist entsprechend dem Filter 10 der Figuren 1 bis 3 ein Filtergehäuse 312 auf. Das Filtergehäuse 312 wird entlang einer Strömungsrichtung X durchströmt. Das Filterelement 200 wird entlang einer Einführrichtung Y durch eine Einführungsöffnung 320 in das Filtergehäuse 312 eingesetzt. Das Filtergehäuse 312 weist eine Abströmöffnung 314 sowie eine Zuströmöffnung 315 auf. Zuströmseitig weist das Filtergehäuse 312 einen Zyklonblock 316 als Vor- oder Grobabscheidermodul mit einer Grobabscheidungsöffnung 318 auf. Die Grobabscheidungsöffnung 318 kann auch hier wie in den Figuren 9 bis 12 gezeigt nach unten in Einführungsrichtung Y orientiert sein. Alternativ kann die Grobabscheidungsöffnung 318 auch seitlich an dem Filter 300 angeordnet sein.

Das über die Zuströmöffnung 315 und den Zyklonblock 316 in das Filterelement 200 gelangende Fluid durchströmt das Filterelement 200 und verlässt das Filtergehäuse 312 über die Abströmöffnung 314. Um eine Abdichtung der Reinseite des Filters 300 gegenüber der Rohseite zu erreichen, ist das Filterelement 200 gegenüber dem Filtergehäuse 312 abgedichtet. Das Filterelement 200 weist eine umlaufende Dichtung 223 auf. Die Dichtung 223 läuft um das Filterelement 200 um und liegt in einer Ebene, die um einen Winkel $\alpha$ gegenüber der Einführrichtung Y bzw. um einen Winkel 90° - $\alpha$ gegenüber der Hauptströmungsrichtung geneigt ist. In den Figuren 9 bis 12 liegt die Dichtungsebene im Wesentlichen senkrecht zur Zeichnungsebene. Eine Dichtfläche 222 der Dichtung 223 wird gegen das Filtergehäuse 312, insbesondere gegen die Gehäusedichtungsfläche 322 gepresst. Die Gehäusedichtfläche 322 schließt mit der Hauptströmungsrichtung X einen Winkel 90° - $\alpha$ ein. Um diese Kraft aufzubringen, weist das Filterelement 200 eine Abstützfläche 224 auf. Die Abstützfläche 224 schließt mit Hauptströmungsrichtung X einen Winkel 90° - $\beta$ ein. Die Abstützfläche 224 erstreckt sich von der Einführöffnung 320 bis nahezu zum Grund des Filtergehäuses 312 und kontaktiert im eingesetzten Zustand des Filterelements 200 eine Führungsfläche 324 des Filtergehäuses 312. Insbesondere verläuft die Führungsfläche 324 unterhalb des durchströmten Bereichs des Filterelements 200 und bildet somit einen U-förmigen Verlauf.

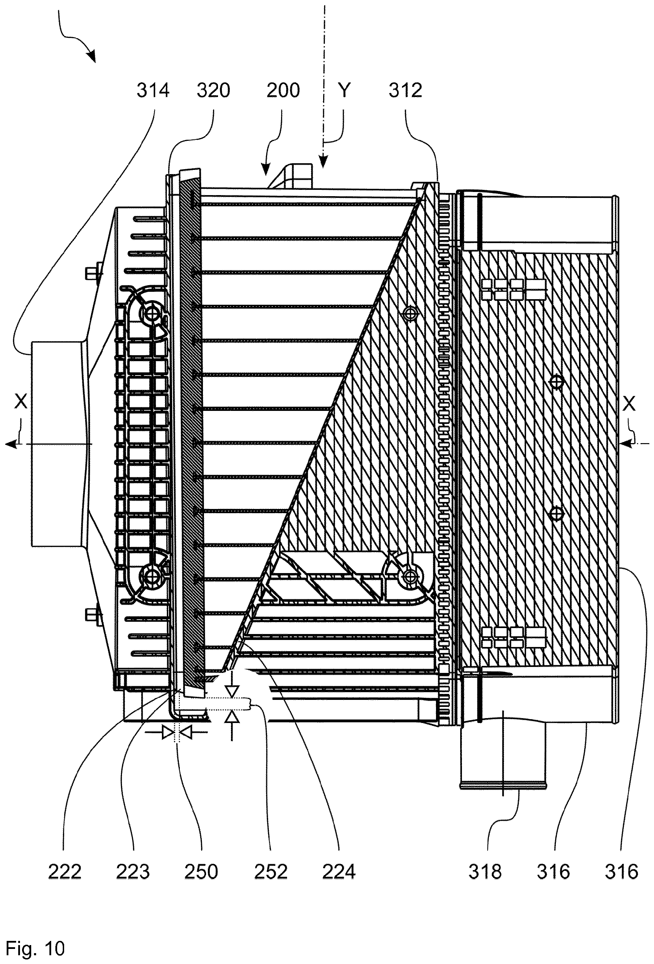

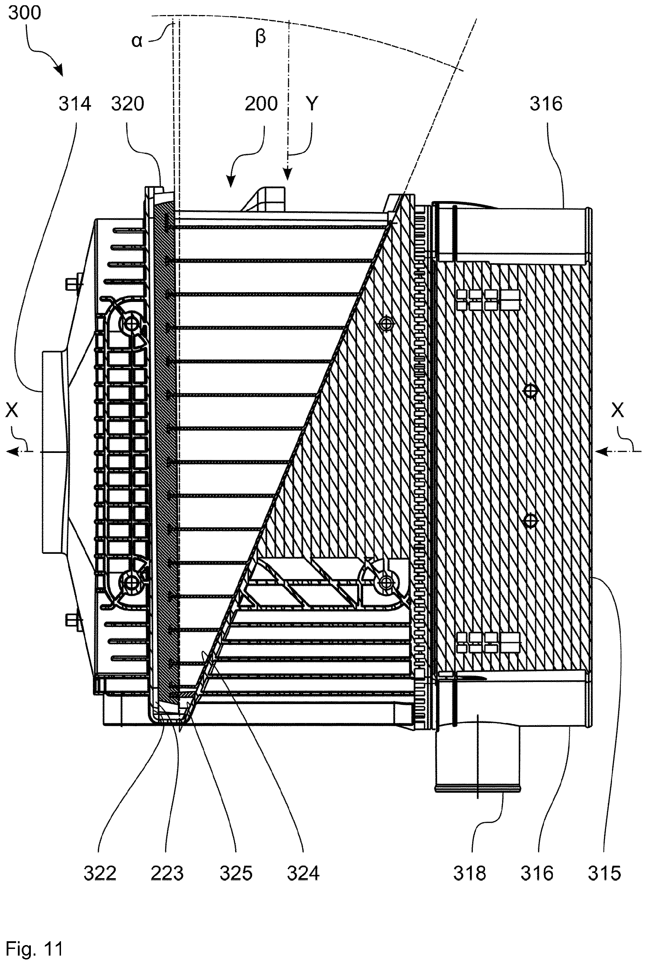

Die Ansicht der Figur 10 stellt einen Schnitt durch den Filter 300 entlang der Ebene X-X' und zeigt das Filterelement 200 in der Position, die es einnimmt, wenn die Dichtfläche 222 des Filterelements 200 während des Einführvorgangs gerade zum Anliegen an die Gehäusedichtfläche 322 kommt. In der Schnittansicht der Figur 11 verläuft ebenfalls entlang der Ebene X-X'. Hier ist das Filterelement 200 in seiner endgültigen Position gezeigt, in der die Dichtung 223 gegen die Gehäusedichtfläche 322 verpresst ist. Zwischen der Position der Figur 10 und der Position der Figur 11 hat sich aufgrund der Verpressung der Dichtung 223 die Dichtfläche 222 in Richtung der Tragstruktur 226, 227 entgegen der Hauptströmungsrichtung X um einen Betrag h bewegt. Dieser Verpressweg h ist in den Figuren mit dem Bezugszeichen 250 versehen.

Entsprechend dem Verpressweg 250 gleitet die Dichtfläche 222 um den Weg r an der Gehäusedichtfläche 322 entlang. Der Gleitweg r ist in der Figur 10 mit dem Bezugzeichen 252 versehen. Zur besseren Darstellung wurde an dieser Stelle ein Teil der Zeichnung der Figur 10 weggelassen.

In der Zeichnung der Figur 11 ist die Endposition des Filterelements 200 erreicht. Die Dichtfläche 222 hat sich um den Verpressweg 250 der Tragstruktur 226 angenähert und ist um den Gleitweg 252 an der Gehäusedichtfläche 322 entlanggeglitten. In Figur 11 ist außerdem gut zu erkennen, dass das Filterelement 200 an der unteren Seite eine dritte Abstützfläche 225 aufweist. Diese liegt an dem im unteren Bereich des Filtergehäuses 312 quer verlaufenden Teil der Gehäuseabstützfläche 324 und stützt sich an dieser ab. Somit wird insbesondere auch im weit von der Einführöffnung 320 entfernten unteren Bereich des Filtergehäuses 312 eine genügend große Anpresskraft auf die Dichtfläche 222 erzeugt.

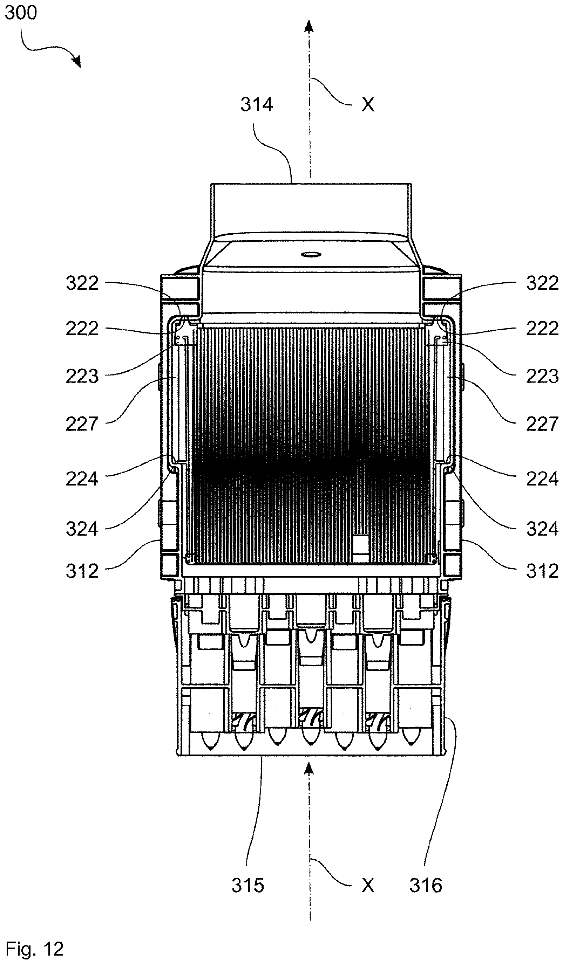

In der Querschnittsansicht der Figur 12 ist gut zu erkennen, wie die Kraft, die in der Figur 12 senkrecht zur Zeichenfläche auf das Filterelement 200 ausgeübt wird, über die Abstützkante bzw. Abstützfläche 224 der Tragstrukturen 226, 227 auf die Dichtfläche 222 der Dichtung 223 übertragen wird. Es ist auch gut ersichtlich, wie die Dichtung 223 in die Tragstruktur 226, 227 und den Filterkörper 202 integriert ist. Das gleiche gilt für die Versteifung 240, die ebenfalls den Filterkörper 202 teilweise durchdringt.

Ebenfalls ist in der Querschnittsansicht der Figur 12 gut der Verlauf der Falten des Filterkörpers 202 zu erkennen. Wie bereits erläutert, verlaufen in dieser Ausführungsform die Faltkanten des Filterelements 200 parallel zur Einführrichtung Y. Eine alternative Ausführungsform ergäbe sich, wenn die Faltkanten senkrecht zur Einführungsrichtung Y und ebenfalls senkrecht zur Hauptströmungsrichtung X verlaufen.

Die vorliegende Erfindung trägt dem Umstand Rechnung, dass durch eine geeignete Wahl der Geometrie, mittels der eine Kraft auf die Dichtung 123 ausgeübt wird, ein Optimum zwischen einer notwendigen Anpresskraft $F_D$ auf die Dichtung 123 und der gleichzeitig dabei auftretenden Scherbelastung durch die Bewegung des Filterelements 100 in Einbaurichtung Y bei bereits an der Dichtfläche 22 anliegender Dichtung 123 beim Einführvorgang gefunden werden kann. Überraschenderweise ist dies auf einen Winkelbreich von 20° - 30° für den Öffnungswinkel $\alpha + \beta$ eingrenzbar für eine Vielzahl von Parameterbereichen.

**Patentansprüche**

1. Filterelement (100) für einen Filter (10) zur Filterung eines Fluids, wobei das Filterelement (100) entlang einer Einführrichtung (Y) in einen Filter (10) einführbar ist und
   ein Filtermedium (102), das entlang einer Hauptströmungsrichtung (X) durchströmbar ist, eine Reinseite (104), eine Rohseite (106),
   eine um das Filtermedium (102) umlaufende Dichtfläche (122), die in Zusammenwirken mit einem Filtergehäuse (12) eines Filters (10) in einem Einbauzustand des Filterelements (100) die Reinseite (104) von der Rohseite (106) trennt und
   eine Abstützkante (124) aufweist, über die in Zusammenwirken mit einem Filtergehäuse (12) eines Filters (10) in einem Einbauzustand des Filterelements (100) eine Kraft (FD) auf die Dichtfläche (122) ausübbar ist,
   wobei Dichtfläche (122) und Abstützkante (124) einen spitzen Winkel ($\alpha + \beta$) größer oder gleich 20° und kleiner oder gleich 30° einschließen.

2. Filterelement nach Anspruch 1, wobei Dichtfläche (122) und Abstützkante (124) einen Winkel ($\alpha + \beta$) von 22° $\pm$ 2°

einschließen.

3. Filterelement nach einem der Ansprüche 1 oder 2, wobei die Abstützkante (124) seitlich außerhalb des durchströmten Bereichs des Filterelements (100) angeordnet ist.

4. Filterelement nach einem der vorhergehenden Ansprüche, wobei das Filtermedium (102) eine Anströmfläche (110) und eine Abströmfläche (108) aufweist, wobei die Abströmfläche (108) in Hauptströmungsrichtung (X) zumindest teilweise stromabwärts der Dichtfläche (122) angeordnet ist.

5. Filterelement nach einem der vorhergehenden Ansprüche, wobei die Abstützkante (124) Teil einer Abstützstruktur (126) ist, wobei die Abstützstruktur (126) eine längliche Ausdehnung in Einführrichtung (Y) aufweist oder/und V-förmig mit vorzugsweise stumpfer Spitze ausgebildet ist oder/und sich in Einführrichtung (Y) verjüngt.

6. Filterelement nach Anspruch 5, mit einer ersten Abstützstruktur (126) auf einer Seite der Hauptströmungsrichtung (X) und einer der ersten Abstützstruktur gegenüberliegenden zweiten Abstützstruktur auf der anderen Seite der Hauptströmungsrichtung (X).

7. Filterelement nach einem der Ansprüche 5 oder 6, wobei die Dichtfläche (122) Teil der Abstützstruktur (126) ist, wobei insbesondere eine Projektion der Abstützkante (124) in Hauptströmungsrichtung (X) auf der Dichtfläche (122) zu liegen kommt oder/und wobei die Dichtfläche (122) bevorzugt in einer Ebene liegt.

8. Filterelement nach einem der vorhergehenden Ansprüche, wobei das Filtermedium (102) ein gefaltetes Filtermedium (102) oder/und quaderförmig ist.

9. Filter zur Filterung eines Fluids, mit
einem Filtergehäuse (12) zur Aufnahme eines Filterelements (100) entlang einer Einführrichtung (Y), und einem darin aufgenommenen Filterelement nach einem der vorhergehenden Ansprüche, wobei das Filtergehäuse (12) entlang einer Hauptströmungsrichtung (X) durchströmbar ist und eine Reinseite, eine Rohseite und eine Gehäusedichtfläche (22) aufweist, die in Zusammenwirken mit einem Filterelement (100) in einem Einbauzustand des Filterelements (100) die Reinseite von der Rohseite trennt, wobei das Filtergehäuse (12) eine Abstützkante (124) aufweist, die in Zusammenwirken mit einem Filterelement (100) in einem Einbauzustand des Filterelements (100) eine Kraft (FD) auf das Filterelement (100) entlang der Hauptströmungsrichtung (X) ausübt, wobei Gehäusedichtfläche (22) und Führungsfläche (24) einen spitzen Winkel $(\alpha + \beta)$ größer oder gleich 20° und kleiner oder gleich 30° einschließen.

10. Filter nach Anspruch 9, wobei die Führungsfläche (124) mit der Gehäusedichtfläche (122) einen Winkel $(\alpha + \beta)$ von 22° $\pm$ 2° einschließt.

11. Filter nach einem der Ansprüche 9 oder 10, wobei eine Filterelementspannvorrichtung (26) vorgesehen ist, die im Einbauzustand des Filterelements (100) eine Kraft auf das Filterelement (100) in Richtung der Einführrichtung (Y) ausübt.

**Claims**

1. Filter element (100) for a filter (10) for filtering a fluid, wherein the filter element (100) can be inserted into a filter (10) along an insertion direction (Y) and features
a filter medium (102) that can be flowed through along a main flow direction (X),
a clean side (104),
a raw side (106),
a sealing surface (122) surrounding the filter medium (102) and separating the clean side (104) from the raw side (106) by interacting with a filter housing (12) of a filter (10) when the filter element (100) is installed and
a supporting edge (124) via which a force (FD) can be applied to the sealing surface (122) by interacting with a filter housing (12) of a filter (10) when the filter element (100) is installed,
wherein the sealing surface (122) and the supporting edge (124) include an acute angle $(\alpha + \beta)$ greater than or equal to 20° and smaller than or equal to 30°.

2. Filter element according to claim 1, wherein the sealing surface (122) and the supporting edge (124) include an

angle ($\alpha + \beta$) of 22° $\pm$ 2°.

3.  Filter element according to one of the claims 1 or 2, wherein the supporting edge (124) is disposed laterally outside the flow-through area of the filter element (100).

4.  Filter element according to one of the preceding claims, wherein the filter medium (102) features an inflow surface (110) and an outflow surface (108), wherein the outflow surface (108) is disposed in main flow direction (X) at least partially downstream of the sealing surface (122).

5.  Filter element according to one of the preceding claims, wherein the supporting edge (124) is part of a support structure (126), wherein the support structure (126) features an elongated extension in insertion direction (Y) or/and has a V-shape with a preferably blunt tip or/and tapers in insertion direction (Y).

6.  Filter element according to claim 5, having a first support structure (126) on one side of the main flow direction (X) and a second support structure opposing the first support structure on the far side of the main flow direction (X).

7.  Filter element according to one of the claims 5 or 6, wherein the sealing surface (122) is part of the support structure (126), wherein in particular a projection of the supporting edge (124) comes to lie on the sealing surface (122) in the main flow direction (X) or/and wherein the sealing surface (122) preferably lies in one plane.

8.  Filter element according to one of the preceding claims, wherein the filter medium (102) is a folded filter medium (102) or/and is cuboid-shaped.

9.  Filter for filtering a fluid, having
    a filter housing (12) for receiving a filter element (100) along an insertion direction (Y), and a filter element received therein according to one of the preceding claims, wherein the filter housing (12) can be flowed through along a main flow direction (X) and features a clean side, a raw side and a housing sealing surface (22) which, in cooperation with a filter element (100), separates the clean side from the raw side when the filter element (100) is installed, wherein the filter housing (12) features a supporting edge (124), which, by interacting with a filter element (100), exerts a force (FD) on the filter element (100) along the main flow direction (X) when the filter element (100) is installed, wherein the housing sealing surface (22) and the guiding surface (24) enclose an acute angle ($\alpha + \beta$) greater than or equal to 20° and smaller than or equal to 30°.

10. Filter according to claim 9, wherein the guiding surface (124) with the housing sealing surface (122) encloses an angle ($\alpha + \beta$) of 22° $\pm$ 2°.

11. Filter according to one of the claims 9 or 10, wherein the filter element clamping device (26) is provided which exerts a force on the filter element (100) in the direction of the insertion direction (Y) when the filter element (100) is installed.

**Revendications**

1.  Elément filtrant (100) pour un filtre (10) destiné à filtrer un fluide, dans lequel l'élément filtrant (100) peut être inséré dans un filtre (10) selon une direction d'insertion (Y), et présente
    un milieu filtrant (102) pouvant être parcouru par un flux le long d'une direction de flux principale (X),
    un côté pur (104),
    un côté brut (106),
    une surface d'étanchéité (122) qui entoure le milieu filtrant (102) et sépare le côté pur (104) du côté brut (106) en coopération avec un boîtier de filtre (12) d'un filtre (10) lorsque l'élément filtrant (100) est installé, et
    un bord d'appui (124) par lequel une force (FD) peut être exercée sur la surface d'étanchéité (122) en coopération avec un boîtier de filtre (12) d'un filtre (10) lorsque l'élément filtrant (100) est installé,
    dans lequel la surface d'étanchéité (122) et le bord d'appui (124) comprennent un angle aigu ($\alpha + \beta$) supérieur ou égal à 20° et inférieur ou égal à 30°.

2.  Élément filtrant selon la revendication 1, dans lequel la surface d'étanchéité (122) et le bord d'appui (124) comprennent un angle ($\alpha + \beta$) de 22° $\pm$ 2°.

3.  Élément filtrant selon l'une des revendications 1 ou 2, dans lequel le bord d'appui (124) est disposé latéralement en dehors de la zone de passage de l'élément filtrant (100).

4. Élément filtrant selon l'une des revendications précédentes, dans lequel le milieu filtrant (102) présente une surface d'afflux (110) et une surface d'écoulement (108), dans lequel la surface d'écoulement (108) est au moins partiellement disposée en aval de la surface d'étanchéité (122) en direction de flux principale (X).

5. Élément filtrant selon l'une des revendications précédentes, dans lequel le bord d'appui (124) fait partie d'une structure d'appui (126), dans lequel la structure d'appui (126) présente une extension allongée dans la direction d'insertion (Y) ou/et est en forme de V avec une pointe de préférence émoussée ou/et est en forme de cônes dans la direction d'insertion (Y).

6. Élément filtrant selon la revendication 5, avec une première structure d'appui (126) sur un côté de la direction de flux principale (X) et une seconde structure d'appui opposée à la première structure d'appui de l'autre côté de la direction de flux principale (X).

7. Élément filtrant selon l'une des revendications 5 ou 6, dans lequel la surface d'étanchéité (122) fait partie de la structure d'appui (126), dans lequel notamment une saillie du bord d'appui (124) vient reposer sur la surface d'étanchéité (122) dans la direction de flux principale (X) ou/et dans lequel la surface d'étanchéité (122) repose de préférence dans un plan.

8. Élément filtrant selon l'une des revendications précédentes, dans lequel le milieu filtrant (102) est un milieu filtrant plié (102) ou/et en forme de parallélépipède.

9. Filtre destiné à filtrer un fluide, ayant
un boîtier de filtre (12) pour recevoir un élément filtrant (100) le long d'une direction d'insertion (Y), et un élément filtrant reçu dans celui-ci selon l'une des revendications précédentes, dans lequel le boîtier de filtre (12) peut être parcouru par un flux le long d'une direction de flux principale (X) et présente un côté pur, un côté brut et une surface d'étanchéité de boîtier (22) qui, en coopération avec un élément filtrant (100), sépare le côté pur du côté brut lorsque l'élément filtrant (100) est installé,
dans lequel le boîtier de filtre (12) présente un bord d'appui (124) qui, en coopération avec un élément filtrant (100), exerce une force (FD) sur l'élément filtrant (100) le long d'une direction de flux principale (X) lorsque l'élément filtrant (100) est installé, dans lequel la surface d'étanchéité de boîtier (22) et la surface de guidage (24) comprennent un angle aigu ($\alpha + \beta$) supérieur ou égal à 20° et inférieur ou égal à 30°.

10. Filtre selon la revendication 9, dans lequel la surface de guidage (124) et la surface d'étanchéité de boîtier (122) comprennent un angle ($\alpha + \beta$) de 22° $\pm$ 2°.

11. Filtre selon l'une des revendications 9 ou 10, dans lequel un dispositif de serrage de l'élément filtrant (26) est prévu qui exerce une force sur l'élément filtrant (100) en direction de la direction d'insertion (Y) lorsque l'élément filtrant (100) est installé.

10 12 26 20 Y 100 26

22

14

X

24

15

100 A

Fig. 1

Fig. 2

Fig. 3

Fig. 4

Fig. 5

Fig. 6

Fig. 7

Fig. 8

Fig. 9

Fig. 10

Fig. 11

300

314    X

322    322
222    222
223    223
227    227

224    224

324    324

312    312

315    X    316

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H0667852 U
- JP 2001329921 A
- US 2004020177 A1